# EUROPÄISCHE PATENTSCHRIFT

(11) **EP 4 617 629 B1**
(45) Veröffentlichungstag und Bekanntmachung des Hinweises auf die Patenterteilung: **19.08.2026**
(21) Anmeldenummer: 24162688.6
(22) Anmeldetag: 11.03.2024
(51) Int. Cl.: G01F 1/075, G01F 15/14, G01F 15/18

(54) **ADAPTERBAUTEIL, DURCHFLUSSMENGENMESSER UND HERSTELLUNGSVERFAHREN FÜR EIN ADAPTERBAUTEIL**
ADAPTER COMPONENT, FLOW METER AND PRODUCTION METHOD FOR AN ADAPTER COMPONENT
ÉLÉMENT ADAPTATEUR, DÉBITMÈTRE ET PROCÉDÉ DE FABRICATION D'UN ÉLÉMENT ADAPTATEUR

(43) Veröffentlichungstag der Anmeldung: 17.09.2025
(73) Patentinhaber: Engelmann Sensor GmbH, 69168 Wiesloch-Baiertal (DE)
(72) Erfinder: Scheib, Oliver, 76889 Schweigen-Rechtenbach (DE); Avergon, Illya, 69126 Heidelberg (DE); Sulzberger, Markus, 70825 Korntal (DE); Fink, Michael, 90763 Fürth (DE)
(74) Vertreter: Durm Patentanwälte PartG mbB

(56) Entgegenhaltungen:
- EP-A1- 3 273 207
- EP-B1- 2 633 274
- DE-B3- 102009 030 828
- DE-C2- 4 121 056
- DE-U1- 202013 001 852
- DE-U1- 29 511 030

## Beschreibung

Die vorliegende Erfindung betrifft ein Adapterbauteil zum Verbinden eines Hydraulikbauteils mit einem Abdeckbauteil eines Durchflussmengenmessers. Die vorliegende Erfindung betrifft weiterhin einen Durchflussmengenmesser sowie ein Verfahren zur Herstellung eines Adapterbauteils.

Durchflussmengenmesser dienen der Erfassung eines Volumenstroms eines Fluids (Fluidstrom) und finden beispielsweise bei Wärme- und Wasserzählern Einsatz. Bei Wärmezählern kann aus dem Volumen des Fluids und dem Temperaturunterschied zwischen Vorlauf und Rücklauf auf die in einem Objekt verbrauchte Wärmemenge rückgeschlossen werden.

Derartige Durchflussmengenmesser weisen oft ein Flügelrad auf bzw. sind nach dem Prinzip eines Flügelradzählers konzipiert. Ein Flügelrad wird von dem strömenden Fluid, zum Beispiel Heizungswasser, direkt angetrieben. Die Anzahl von Umdrehungen pro Zeiteinheit wird mittels einer Spule abgetastet. Die Abtastspule ist dabei Teil eines elektrischen Schwingkreises, dessen Schwingung durch ein auf dem Flügelrad sitzendes Dämpfungselement (auch als Modulatorsegment bezeichnet) periodisch gedämpft wird, wenn nämlich das aus elektrisch gut leitfähigem Material bestehende Dämpfungselement das Magnetfeld der Abtastspule durchfährt, wobei in dem Dämpfungselement Wirbelströme induziert werden. Dabei kann zur Vermeidung von Unwuchten des Flügelrads mehr als ein Dämpfungselement auf dem Flügelrad angeordnet sein, insbesondere rotationssymmetrisch. In diesem Fall werden pro Umdrehung mehrere Zählimpulse erzeugt, was mittels der Auswerteelektronik entsprechend verarbeitet wird. Relevant ist, dass der Abstand zwischen Spule und Dämpfungselement(en) möglichst konstant und genau vorgebbar ist, um eine präzise Messung zu ermöglichen. Zudem können auch mehrere Spulen verwendet werden.

Die Spule bzw. die Spulen befinden sich üblicherweise außerhalb der Messkammer, sodass sie mit dem Fluid nicht in Berührung kommen. Dagegen läuft das Flügelrad in einer Messkammer, die von dem Fluid durchflossen wird. Das Flügelrad besteht üblicherweise aus Kunststoff, so dass es gegen die meisten Fluide, insbesondere Wasser, weitgehend unempfindlich ist. Das Dämpfungselement muss dagegen aus einem gut leitfähigen Metall sein, sodass die Gefahr von Korrosion bei Kontakt mit dem strömenden Fluid besteht.

DE 10 2010 055 752 offenbart in diesem Zusammenhang einen mechanischen Durchflusszähler mit einem Flügelrad, an dessen Oberseite sich eine nierenförmige Geberschicht befindet, welche von dem Spritzgießmaterial des Flügelradkörpers umspritzt sich im Innern des Flügelradkörpers befindet. Die Geberschicht besteht zum Beispiel aus CU, AG, PT oder AU und hat eine Schichtdicke von 5 bis 10 µm.

DE 10 2009 030828 B3 offenbart einen Wasser-/Wärmezähler, umfassend einen in einem Unterteil angeordneten hydraulischen Geber und ein in einem Oberteil angeordnetes Zählwerk, wobei das Unterteil und das Oberteil durch zumindest eine zerstörungsfrei nicht zu lösende Verbindung miteinander verbunden sind. Das Oberteil und das Unterteil sind mittels eines Montageringes miteinander verbunden, wobei der Montagering und das Unterteil durch eine erste zerstörungsfrei nicht zu lösende Verbindung miteinander verbunden sind, wobei der Montagering und das Oberteil durch eine zweite zerstörungsfrei nicht zu lösende Verbindung miteinander verbunden sind.

In aktuellen Konstruktionen wird oft zwischen einem fluidführenden Hydraulikbauteil, in dem das Flügelrad angeordnet ist, und einem weiteren Bauteil zur Bereitstellung der Spulen und der Auswerteelektronik unterschieden. Das Hydraulikbauteil kann als Metall- oder Kunststoffbauteil ausgebildet sein. Das weitere Bauteil kann ein- oder mehrteilig ausgebildet sein und kann aus einem anderen Material als das Hydraulikbauteil gefertigt sein. Oft werden die Bauteile dabei von unterschiedlichen Herstellern bereitgestellt und erst vor Ort, im angestrebten Einsatzort, zusammengefügt. Aufgrund von Herstellungstoleranzen kann es dabei dazu kommen, dass der Abstand zwischen Spule und Dämpfungselement nicht ausreichend präzise vorgebbar ist. Dies wiederum kann Messungenauigkeiten bzw. eine erschwerte Messsignalauswertung bedingen.

Ausgehend hiervon stellt sich der vorliegenden Erfindung die Aufgabe, einen zuverlässigen und gegenüber Herstellungstoleranzen tolerabel ausgebildeten Ansatz zum Anbinden eines weiteren Bauteils an ein Hydraulikbauteil zu ermöglichen. Insbesondere soll eine Anbindung einer Abtastspule ermöglicht werden. Insbesondere soll eine gut handhabbare und robuste Anbindung von Mess- und Auswertekomponenten an ein Hydraulikbauteil bereitgestellt werden.

Zum Lösen dieser Aufgabe betrifft die vorliegende Erfindung in einem ersten Aspekt ein Adapterbauteil zum Verbinden eines Hydraulikbauteils mit einem Abdeckbauteil eines Durchflussmengenmessers, mit:
- einem Aufnahmeteil mit einem ringförmigen Außenabschnitt und einem Zentralabschnitt, wobei der Zentralabschnitt eine erste Aufnahme für eine Spule auf einer dem Hydraulikbauteil zugewandten Seite und eine zweite Aufnahme für eine Auswerteelektronik auf einer dem Abdeckbauteil zugewandten Seite umfasst und wobei Außenabschnitt und Zentralabschnitt über eine flexible Verbindung verbunden sind; und
- einem ringförmigen Dichtungsteil, der mit dem Außenabschnitt des Aufnahmeteils korrespondiert, zum Herstellen einer fluiddichten Abdichtung zum Hydraulikbauteil und/oder zum Abdeckbauteil.

In einem weiteren Aspekt betrifft die Erfindung einen Durchflussmengenmesser zum Messen eines Fluidflusses durch eine Leitung mit:
- einem Hydraulikbauteil zum Durchleiten des Fluidflusses mit einem in dem Fluidfluss angeordneten Flügelrad, an dem ein Dämpfungselement angeordnet ist;
- einer Spule zum Erfassen einer Bewegung des Dämpfungselements an dem Flügelrad;
- einer Platine mit einer Auswerteelektronik, die mit der Spule verbunden ist;
- einem Abdeckbauteil zum Schützen der Auswerteelektronik vor externen Einflüssen; und
- einem Adapterbauteil wie zuvor beschrieben, das das Hydraulikbauteil mit dem Abdeckbauteil verbindet.

Zuletzt betrifft ein Aspekt der Erfindung ein Verfahren zum Herstellen eines Adapterbauteils wie zuvor beschrieben, mit den Schritten:
- Spritzgießen des Aufnahmeteils und anschließendes Spritzgießen des Dichtungsteils mit einem anderen Material in einem Zwei-Komponenten-Spritzgussverfahren.

Bevorzugte Ausgestaltungen der Erfindung werden in den abhängigen Ansprüchen beschrieben. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere können der Durchflussmengenmesser und das Verfahren entsprechend den in den abhängigen Ansprüchen für das Adapterbauteil beschriebenen Ausgestaltungen ausgeführt sein.

Erfindungsgemäß ist bei einem Adapterbauteil zum Verbinden eines Hydraulikbauteils mit einem Abdeckbauteil eines Durchflussmengenmessers eine flexible Verbindung zwischen einem äußeren Abschnitt (Außenabschnitt) und einem inneren Abschnitt (Zentralabschnitt) vorgesehen. Diese Verbindung ist flexibel ausgestaltet, sodass sie innerhalb vorgegebener Grenzen eine Bereitstellung unterschiedlicher Ausdehnungen bzw. Abstände ermöglicht. Durch die flexible Verbindung kann insbesondere ein Ausgleich von Herstellungstoleranzen und Verformungen durch Temperaturänderungen im laufenden Betrieb erfolgen. Wenn das Hydraulikbauteil beispielsweise von einem anderen Hersteller als das Abdeckbauteil fertig wird oder auch andere Prozesse bzw. andere Materialien für Hydraulikbauteile und Abdeckbauteil verwendet werden, kann es zu Unterschieden in der Abmessung kommen. Um dennoch eine vordefinierte Beabstandung zwischen Spule im Abdeckbauteil und Dämpfungselement bzw. Flügelrad im Hydraulikbauteil zu ermöglichen, wird die erfindungsgemäße flexible Verbindung verwendet. Das Adapterbauteil bildet in anderen Worten also eine Art Adapter und ermöglicht ein flexibles Halten einer Platine für die Auswerteelektronik sowie einer Spule. Das Adapterbauteil ist insoweit multifunktional. Das Adapterbauteil kann auch als Fusionsbauteil bezeichnet werden.

Der ringförmige Außenabschnitt des Aufnahmeteils des Adapterbauteils wird fest (unflexibel) mit dem Hydraulikbauteil verbunden, beispielsweise durch Anklemmen oder Aufschrauben. Der Zentralabschnitt wiederum ist flexibel mit dem Außenabschnitt verbunden und ermöglicht insoweit eine Beweglichkeit gegenüber diesem in vordefinierten Grenzen. Insoweit ist der Zentralabschnitt gegenüber dem Außenabschnitt sowie damit auch gegenüber dem Hydraulikbauteil flexibel gelagert. Die Flexibilität bezieht sich dabei auf eine räumliche Verlagerbarkeit, insbesondere entlang einer Zentralachse, die senkrecht zum ringförmigen Außenabschnitt verläuft. Zudem vorgesehen ist, dass der Außenabschnitt über einen ringförmigen Dichtungsteil mit dem Hydraulikbauteil sowie auch mit dem Abdeckbauteil verbunden ist, wobei durch den Dichtungsteil eine fluiddichte Abdichtung bereitgestellt wird. Insbesondere kann beispielsweise beim Aufschrauben des Adapterbauteils in eine entsprechende Aufnahme des Hydraulikbauteils eine Verformung des Dichtungsteils erfolgen, um eine Fluiddichtigkeit zu erreichen.

Eine wasserdichte Verbindung zwischen Hydraulikbauteil und Abdeckbauteil ist von hoher Wichtigkeit, da die im Abdeckbauteil liegende Auswerte- und Anzeigeelektronik über die gesamte Lebensdauer vor Feuchtigkeit geschützt werden muss und Durchflussmengenmesser häufig in Nassräumen verbaut sind. Trotz der Anforderung der wasserdichten Verbindung zwischen Hydraulikbauteil und Abdeckbauteil soll das Abdeckbauteil vorzugsweise drehbar auf dem Hydraulikbauteil anbringbar sein, sodass ein Anzeigeelement (Display) in eine beliebige Position gedreht werden kann.

Im Vergleich zu bisherigen Ansätzen, bei denen in einem Durchflussmengenmesser auf zwei oder mehr getrennte Teile zurückgegriffen wurde, ermöglicht die erfindungsgemäße flexible Verbindung eine verbesserte Robustheit gegenüber Herstellungstoleranzen. Eine präzise Einstellung bzw. Vorgabe des Abstands zwischen Spule und Dämpfungselement kann erfolgen, um damit eine hohe Messqualität zu erreichen. Messfehler werden vermieden und die Messsignalstabilität wird erhöht. Die Durchflussmengenmessung wird mit hoher Genauigkeit bereitgestellt. Gerade auch bei der Verwendung verschiedener Materialien kann dennoch eine hohe Messgenauigkeit erreicht werden.

In einer bevorzugten Ausgestaltung ist die flexible Verbindung als Federverbindung ausgebildet. Der Außenabschnitt und der Zentralabschnitt sind vorzugsweise entlang einer senkrecht zu einer Ringebene des Außenabschnitts verlaufenden Zentralachse gegenüber einander gefedert verlagerbar. Insbesondere kann eine Verlagerbarkeit um eine Federstrecke von ca. 0,5 mm bis 2 mm, insbesondere ca. 1 mm, vorgesehen sein. Die flexible Verbindung ist als Federverbindung ausgebildet. Insbesondere kann eine Strebe oder eine andere mechanische Verbindung federnd ausgeführt sein. Insoweit kann eine Verformbarkeit eines Materials im Sinne einer Federwirkung ausgenutzt werden, um die flexible Verbindung bereitzustellen. Besonders vorteilhaft ist es dabei, wenn die Flexibilität entlang einer Zentralachse besteht. Beim Zusammenfügen von Adapterbauteil und Hydraulikbauteil sind insbesondere in diese Richtung bestehende Abstandsungenauigkeiten zu vermeiden. Wenn beispielsweise die Spule am Adapterbauteil gelagert ist und das Dämpfungselement bzw. das Flügelrad im Adapterbauteil gelagert sind, soll der Abstand zwischen Spulen und Dämpfungselement möglichst einheitlich, genau vorgebbar und unabhängig von Herstellungstoleranzen sein. Dieser Abstand ist insbesondere entlang der Zentralachse oft variabel, da dies der Zusammenfügungsrichtung von Adapterbauteil und Hydraulikbauteil entspricht. Eine Flexibilität bzw. eine gefederte Verlagerbarkeit entlang dieser Achse ermöglicht insoweit eine Herstellung eines definierten Abstands durch Auf- oder Andrücken. Insbesondere kann die Spule an eine Auflagefläche am Hydraulikbauteil (mit definiertem Abstand zum darunterliegenden Dämpfungselement) angedrückt werden.

In einer bevorzugten Ausgestaltung ist das Adapterbauteil zum Anbinden in eine runde Aufnahmeöffnung des Hydraulikbauteils ausgebildet. Vorzugsweise ist ein Außenradius des ringförmigen Dichtungsteils im entspannten Zustand größer als ein Innendurchmesser der Aufnahmeöffnung. Zudem ist vorzugsweise der ringförmige Dichtungsteil zum Herstellen der fluiddichten Abdichtung zum Hydraulikbauteil durch Verformung ausgebildet. Das Anbinden in die runde Aufnahmeöffnung kann durch ein Eindrücken und Verrasten (vorzugsweise) oder auch durch Verschrauben erfolgen. Das Adapterbauteil wird also in die entsprechende Aufnahmeöffnung eingedrückt und durch Verrasten entsprechender Verrastelemente festgelegt. Bei diesem Eindrücken wird das Dichtungsteil verformt, um so eine fluiddichte Verbindung herzustellen. In anderen Worten stellt der ringförmige Dichtungsteil die Funktion eines Dichtungsrings bereit. Es ergibt sich eine effizient herstellbare und einfach bedienbare Lösung bzw. eine effiziente Installierbarkeit.

In einer bevorzugten Ausgestaltung umfasst der Aufnahmeteil in seinem Außenabschnitt einen ringförmigen Aufnahmebereich zum Aufnehmen des Dichtungsteils. Vorzugsweise umfasst der Aufnahmeteil einen Kompensationsbereich zum Aufnehmen eines Materialüberschusses einer Verformung des Dichtungsteils beim Verbinden des Adapterbauteils mit dem Hydraulikbauteil. Der Aufnahmeteil kann insbesondere eine Art umlaufende Vertiefung für den Dichtungsteil umfassen. Der Dichtungsteil wird in diesen ringförmigen Aufnahmebereich eingelegt bzw. befindet sich in diesem ringförmigen Aufnahmebereich. Der bevorzugt vorgesehene Kompensationsbereich dient zum Aufnehmen einer Art Bugwelle des Dichtungsteils beim Verbinden des Adapterbauteils mit dem Hydraulikbauteil. Insbesondere kann beim Einschieben eine Art Bugwelle des verformten Materials des Dichtungsteils in diesen Kompensationsbereich eingedrückt und eingeschoben bzw. aufgenommen werden. Es ergibt sich eine effiziente Abdichtung. Durch die Aufnahme der Bugwelle in dem Kompensationsbereich wird eine zu starke Überdrückung der Dichtkomponente verhindert, womit die Drehbarkeit des Abdeckbauteils gegenüber dem Hydraulikbauteil gewährleistet wird.

In einer bevorzugten Ausgestaltung umfasst die flexible Verbindung drei Streben zum Bereitstellen einer Federwirkung durch Verformung. Insbesondere können drei geschwungen ausgebildete Streben vorgesehen sein. Die Streben sind verformbar ausgebildet und stellen durch die Verformbarkeit die Flexibilität bereit. Insbesondere können insoweit geschwungene Streben, die in der Art einer Feder wirken, vorgesehen sein. Unter einer geschwungenen Strebe versteht sich insbesondere eine Strebe mit S-förmigem Profil. Es versteht sich, dass dabei unterschiedliche Formen möglich sind. Es ergibt sich eine effiziente Herstellbarkeit hinsichtlich der Kosten sowie eine zuverlässige Bereitstellung der flexiblen Verbindung.

In einer bevorzugten Ausgestaltung umfasst die erste Aufnahme drei Aufnahmehohlräume, die im Wesentlichen vom Zentralabschnitt ausgehend in Richtung des Hydraulikbauteils verlaufen und die jeweils zum Aufnehmen einer Spule ausgebildet sind. Vorzugsweise sind die Aufnahmehohlräume zum Festlegen der Spulen in einer parallel zu einer Ringebene des Außenabschnitts verlaufenden Spulenebene ausgebildet, insbesondere durch Festklemmen und/oder Verformung einer Quetschrippe. Die Aufnahmevorsprünge können insbesondere einer Art Beinchen entsprechen, die vom Zentralabschnitt ausgehend in Richtung des Hydraulikbauteils verlaufen. Durch den Verlauf in Richtung des Hydraulikbauteils ergibt sich ein möglichst geringer Abstand zu Flügelrad und Dämpfungselement. Durch die flexible Lagerung des Zentralabschnitts kann ein definierter Abstand zum Hydraulikbauteil und dem Flügelrad/Dämpfungselement hergestellt werden, da eine Art Festdrücken oder Andrücken an eine Auflagefläche am Hydraulikbauteil ermöglicht wird. Die Spulen können dabei insbesondere in einem Hohlraum gelagert sein. Beispielsweise kann innerhalb des Hohlraums eine Quetschrippe vorgesehen sein, durch die die Spulen durch mechanische Verformung festlegbar sind. Durch die Verwendung der Quetschrippen kann der Hohlraum größer ausgeführt sein, als die Spule selbst. Trotzdem kann die Spule ortsfest fixiert werden. Die Verwendung der Quetschrippen ermöglicht also auch einen Ausgleich geometrischer Toleranzen von Spulen. Es ergibt sich eine effiziente Herstellbarkeit bei zuverlässiger Bereitstellung der gewünschten Funktionalität.

In einer bevorzugten Ausgestaltung umfasst die zweite Aufnahme drei Ständer, die sich zumindest teilweise in Richtung des Abdeckbauteils erstrecken und die in drei in einer parallel zu einer Ringebene des Außenabschnitts verlaufenden Aufnahmeebene liegende Aufnahmepunkte für eine Platine enden. Die Ständer können insoweit in entgegengesetzter Richtung zu den Aufnahmevorsprüngen verlaufen. Die Ständer dienen zum Festlegen einer Platine für die Auswerteelektronik. Dadurch, dass die Auswerteelektronik und die Platine ebenfalls am Zentralabschnitt gelagert sind, wird eine mechanische Belastung von Lötpunkten vermieden. Die Stellen, an denen die Spule mit der Platine verbunden sind, sind üblicherweise durch Lötpunkte realisiert. Wenn die flexible Verbindung belastet wird, um einen Kontakt zwischen Spule und entsprechender Anpressfläche am Hydraulikbauteil herzustellen, wird die Platine und die Auswerteelektronik mitverlagert. Insoweit wird eine mechanische Belastung von Lötpunkten vermieden. Es ergibt sich eine mechanische Robustheit.

In einer bevorzugten Ausgestaltung ist ein Material des Dichtungsteils weicher als ein Material des Aufnahmeteils. Insbesondere können also zwei verschiedene Materialien vorgesehen sein. Durch die verschiedenen Materialien kann einerseits die Dichtungswirkung und andererseits die flexible Verbindung sowie die zuverlässige Bereitstellung der entsprechenden Aufnahmen für die Auswerteelektronik und die Spulen bereitgestellt werden.

In einer bevorzugten Ausgestaltung ist das Adapterbauteil in einem Zwei-Komponenten-Spritzgussverfahren herstellbar, bei dem in einem ersten Schritt der Aufnahmeteil eingespritzt wird und in einem zweiten Schritt der Dichtungsteil eingespritzt wird. Insbesondere kann durch ein derartiges Zwei-Komponenten-Spritzgussverfahren ein weiches und eher plastisch verformbares Material mit einem härteren und eher elastisch verformbaren Material kombiniert werden. Durch die Verwendung eines Zwei-Komponenten-Spritzgussverfahrens ergibt sich eine effiziente Herstellbarkeit bei gleichzeitiger Bereitstellung der gewünschten Funktionalität.

In einer bevorzugten Ausgestaltung ist der Dichtungsring an seiner Anlage zum Hydraulikbauteil und/oder an seiner Anlage zum Abdeckbauteil rotationssymmetrisch ausgebildet, um eine Rotation des Abdeckbauteils gegenüber dem Hydraulikbauteil zu ermöglichen. Durch eine Verdrehbarkeit des Abdeckbauteils sowie auch ggf. des Adapterbauteils gegenüber dem Hydraulikbauteil kann eine Ausrichtung eines Displays oder einer anderen Anzeige ermöglicht werden. In üblichen Installationen ist das Hydraulikbauteil fest mit einer Leitung verbunden. Adapterbauteil und Abdeckbauteil werden daran festgelegt. Da die Einbaurichtung des Hydraulikbauteils insoweit nicht variabel ist, kann durch eine Drehbarkeit des Abdeckbauteils sowie ggf. des Adapterbauteils eine Ausrichtung der Anzeige zu einem gewissen Grad ermöglicht werden. Es ergibt sich eine verbesserte Bedienbarkeit.

In einer bevorzugten Ausgestaltung umfasst der Aufnahmeteil in seinem Außenabschnitt einen Rasthaken und/oder ein Rastlager zum Herstellen einer Verbindung mit dem Hydraulikbauteil durch Verrasten. Vorzugsweise weist der Rasthaken und/oder das Rastlager keine radiale Begrenzung auf, um eine Drehbarkeit des Adapterbauteils gegenüber dem Hydraulikbauteil zu ermöglichen. Eine Verrastverbindung ermöglicht insbesondere eine Verdrehbarkeit. Durch eine Verdrehbarkeit kann eine Bedienung sowie eine Zugänglichkeit und eine Ablesbarkeit einer möglicherweise vorgesehenen Anzeige vereinfacht werden. Die Bedienbarkeit im Betrieb des Durchflussmengenmessers wird verbessert. Rasthaken und Rastlager wirken in einer Rastverbindung durch einen Verrastvorgang zusammen. Es ergibt sich eine zuverlässige und einfach umsetzbare Festlegbarkeit.

In einer bevorzugten Ausgestaltung weist der Aufnahmeteil eine Sollbruchstelle auf, die zum Brechen bei einem Entfernen des Adapterbauteils vom Hydraulikbauteil nach einem initialen Befestigen ausgebildet ist. Wenn also Adapterbauteil und Hydraulikbauteil erstmalig (initial) verbunden sind, kann keine zerstörungsfreie Lösbarkeit mehr ermöglicht werden. Dies bewirkt eine Manipulationssicherheit. Oft werden derartige Durchflussmengenmesser in Verteilsystemen eingesetzt, die eine solche Manipulationssicherheit erfordern. Dies kann vorzugsweise durch eine Sollbruchstelle am Aufnahmeteil umgesetzt werden.

Ein Zentralabschnitt bezeichnet hierin insbesondere einen Teilbereich eines Bauteils, der zumindest in einer Raumrichtung mittig (zentral) angeordnet ist. Ein Außenabschnitt ist demgegenüber in dieser Raumrichtung außen (radial außenliegend), insbesondere um den Zentralabschnitt herum angeordnet. Beide Abschnitte sind Teil eines einzigen Bauteils. Die zwischen den beiden Abschnitten vorgesehene Verbindung ist flexibel, insbesondere durch mechanische Verformbarkeit. Der Dichtungsteil ist ein separates Bauteil, das aber mit dem Aufnahmeteil verbunden sein kann. Insbesondere können aber zwei verschiedene Materialien für Aufnahmeteil und Dichtungsteil vorgesehen sein.

Die Erfindung wird nachfolgend anhand einiger ausgewählter Ausführungsbeispiele im Zusammenhang mit den beiliegenden Zeichnungen näher beschrieben und erläutert. Es zeigen:
- Figur 1: eine schematische Darstellung der Komponenten eines erfindungsgemäßen Durchflussmengenmessers;
- Figur 2: eine schematische Darstellung der Komponenten eines erfindungsgemäßen Adapterbauteils;
- Figur 3: eine schematische Darstellung einer Ausführungsform eines erfindungsgemäßen Adapterbauteils in einer perspektivischen Ansicht und in einer Schnittansicht;
- Figur 4: zwei perspektivische Darstellungen einer Ausführungsform eines erfindungsgemäßen Adapterbauteils; und
- Figur 5: eine Konstruktionsansicht in vier Perspektiven einer Ausführungsform eines Aufnahmeteils einer Ausführungsform des erfindungsgemäßen Adapterbauteils.

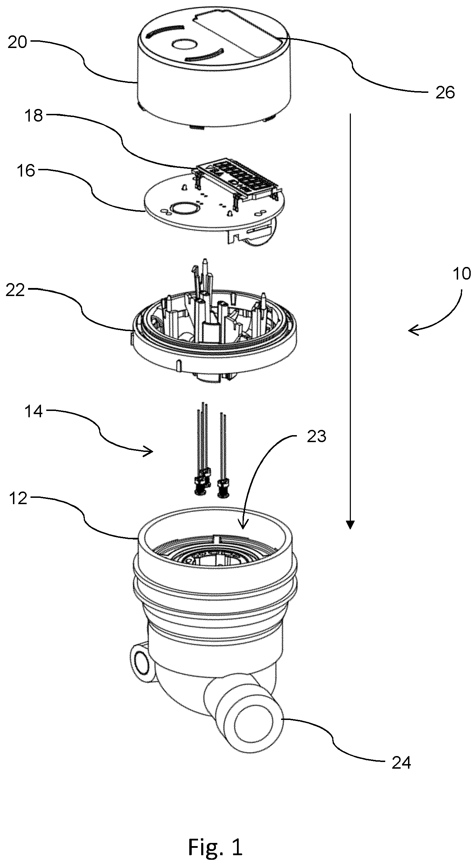

In Figur 1 ist schematisch ein erfindungsgemäßer Durchflussmengenmesser 10 zum Messen eines Fluidflusses durch eine Leitung (nicht dargestellt) gezeigt. Der Durchflussmengenmesser 10 umfasst ein Hydraulikbauteil 12, eine Spule 14, eine Platine 16 mit einer Auswerteelektronik 18, ein Abdeckbauteil 20 sowie ein Adapterbauteil 22. Die Darstellung entspricht zur besseren Übersichtlichkeit einer Art Explosionsdarstellung, wobei die Komponenten in Pfeilrichtung zusammengefügt sind).

Derartige Durchflussmengenmesser 10 werden in eine Leitung eingebracht, beispielsweise durch Einschrauben, um einen Fluidfluss durch diese Leitung zu erfassen. Beispielsweise bei Wärmemengenzählern kann in dieser Weise unter Berücksichtigung einer Temperaturdifferenz zwischen Vor- und Rücklauf eine Wärmemenge ermittelt werden. Ebenfalls können Anwendungen im Bereich der Wasserverbrauchsermittlung sowie in anderen Feldern liegen.

Das Hydraulikbauteil 12 wird in der dargestellten Ausführungsform mittels entsprechender Anschlussstutzen 24 in eine Rohrleitung eingeklinkt. Das Hydraulikbauteil 12 wird auch als fluidführende Komponente bezeichnet. Die weiteren Komponenten stehen nicht direkt mit dem Fluid in Kontakt. Innerhalb des Hydraulikbauteils 12 wird der Fluidfluss derart gelenkt, dass ein Flügelrad (in der Darstellung in Figur 1 nicht erkennbar) durch den Fluidfluss in eine Drehbewegung versetzt wird, der Fluidfluss wird sozusagen zumindest teilweise an dem Flügelrad vorbeigeleitet. Am Flügelrad ist ein Dämpfungselement, insbesondere eines oder mehrere Metallplättchen, vorgesehen, das mit dem Flügelrad rotiert. Die Bewegung dieses Metallplättchens bewirkt eine Beeinflussung einer Spule 14, die wiederum messbar ist. Es können insoweit also Umläufe des Flügelrads erfasst werden und damit auf den Fluidfluss rückgeschlossen werden.

Im dargestellten Ausführungsbeispiel in Figur 1 sind drei Spulen 14 vorgesehen. Die Spulen 14 sind über deren Anschlüsse mit der Auswerteelektronik 18 auf der Platine 16 verbunden. Insbesondere kann eine Drahtverbindung mit entsprechenden Lötpunkten vorgesehen sein. Im dargestellten Ausführungsbeispiel umfasst die Auswerteelektronik 18 weiterhin ein Display, das durch ein entsprechendes Fenster 26 im Abdeckbauteil 20 ablesbar ist. Das Abdeckbauteil 20 ist dazu ausgebildet, die Auswerteelektronik 18 sowie alle weiteren Komponenten vor externen Einflüssen, wie beispielsweise Feuchtigkeit, Wasser oder auch Staub etc. zu schützen.

Oft ist bei derartigen Durchflussmengenmessern 10 der Hersteller des Hydraulikbauteils 12 vom Hersteller der weiteren Komponenten, insbesondere der für die Auswertung und das Auslesen benötigten Komponenten verschieden. Zudem ist es oft so, dass für das Hydraulikbauteil 12 ein anderes Material als für die weiteren Komponenten verwendet wird. Beispielsweise kann das Hydraulikbauteil 12 aus Metall ausgebildet sein, wohingegen die anderen Komponenten im Spritzgussverfahren hergestellte Kunststoffteile umfassen können. Aus diesen und aus anderen Gründen ergeben sich insoweit Toleranzen in den Abmessungen, die dazu führen können, dass der Abstand zwischen den Spulen 14 und dem Dämpfungselement beim Flügelrad nicht exakt vorgebbar ist. Dieser Abstand ist für eine genaue Erfassung der Bewegung des Flügelrads bzw. des Dämpfungselements aber relevant und kann bei Abweichungen von einer Vorgabe zu ungenauen Messungen führen. In anderen Worten müssen die Spulen 14 also möglichst an einer Anlagefläche, unter der das Flügelrad mit dem Dämpfungselement rotiert, direkt anliegen, um insoweit einen Abstand zwischen Spulen 14 und Dämpfungselement möglichst genau vorzugeben.

Um den Abstand zwischen den Spulen 14 und dem Dämpfungselement am Flügelrad möglichst exakt vorgebbar zu machen, ist das erfindungsgemäße Adapterbauteil 22 sozusagen als Zwischenstück zwischen der Platine 16 mit der Auswerteelektronik 18 und der Abdeckung 20 einerseits sowie dem Hydraulikbauteil 12 andererseits vorgesehen. Das Adapterbauteil 22 ist im dargestellten Ausführungsbeispiel zum Einkoppeln in eine runde Aufnahmeöffnung 23 des Hydraulikbauteils 12 ausgebildet, beispielsweise durch Verrasten. Das Adapterbauteil 22 ermöglicht eine Kompensation von Abständen zwischen den Spulen 14 und deren vorgegebener Positionierung innerhalb des Hydraulikbauteils 12, unterhalb der das Flügelrad mit dem Dämpfungselement rotiert.

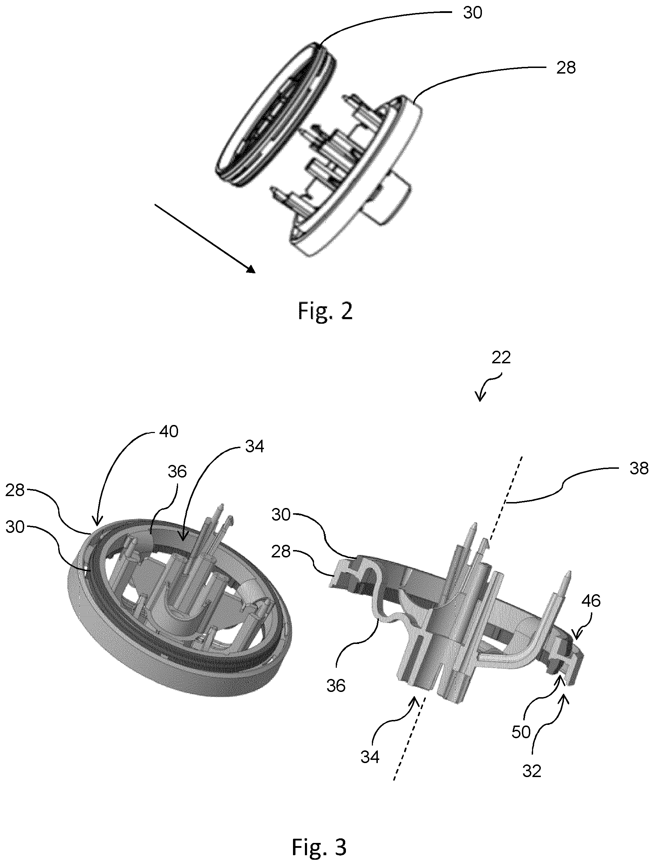

In Figur 2 ist eine Ausführungsform des erfindungsgemäßen Adapterbauteils 22 in einer perspektivischen Ansicht dargestellt. Das Adapterbauteil 22 umfasst einen Aufnahmeteil 28 sowie einen Dichtungsteil 30. In der Darstellung in Figur 2 sind die beiden Komponenten zur besseren Visualisierung separat dargestellt. Es versteht sich, dass das Aufnahmeteil 28 und Dichtungsteil 30 aneinanderliegend (in Pfeilrichtung zusammengefügt) ausgebildet sind. Der Aufnahmeteil 28 dient zum mechanischen Festlegen des Adapterbauteils 22 am Hydraulikbauteil einerseits sowie zum mechanischen Festlegen der Spule, der Platine mit der Auswerteelektronik und des Abdeckbauteils andererseits. Der Dichtungsteil 30 dient zum Herstellen einer fluiddichten Abdichtung zum Hydraulikbauteil und/oder zum Abdeckbauteil. Vorzugsweise wird eine fluiddichte Abdichtung zu beiden Komponenten hergestellt.

In der Herstellung des Adapterbauteils 22 hat es sich als vorteilhaft herausgestellt, ein Zwei-Komponenten-Spritzgussverfahren einzusetzen. In einem ersten Schritt wird der Aufnahmeteil 28 eingespritzt. Dann wird ein Platzhalter entfernt und in einem zweiten Schritt der Dichtungsteil 30 eingespritzt. Insbesondere ermöglicht ein derartiges Zwei-Komponenten-Spritzgussverfahren eine Verwendung von zwei verschiedenen Materialien für die zwei Teile. Der Dichtungsteil 30 kann aus elastischem Material ausgebildet sein, während der Aufnahmeteil 28 aus einem Material mit geringerer Elastizität ausgebildet sein kann. Beispielsweise kann als Weichkomponente für den Dichtungsteil 30 TPS-SEBS-Lifoflex UV 50.01 B05 verwendet werden. Für die Hartkomponente, den Aufnahmeteil 28, kann ROMILOY, ABS+PC1035/04 verwendet werden. In einem erfindungsgemäßen Herstellungsverfahren wird für die Herstellung des Adapterbauteils insoweit zuerst die Hartkomponente gespritzt. Im Anschluss wird die Weichkomponente direkt auf die Hartkomponente gespritzt. Dies bedingt, dass ein einzelnes Teil erzeugt wird, das nicht zusätzlich in einem Montageschritt zusammengefügt bzw. montiert werden muss.

In Figur 3 ist das erfindungsgemäße Adapterbauteil 22 in einer Ausführungsform perspektivisch in zwei Ansichten dargestellt. Die Darstellung auf der rechten Seite zeigt eine Schnittdarstellung. Das Adapterbauteil 22 umfasst den Aufnahmeteil 28 sowie den Dichtungsteil 30, die im dargestellten Ausführungsbeispiel zusammengefügt dargestellt sind und beispielsweise, wie zuvor beschrieben, in einem Zwei-Komponenten-Spritzgussverfahren hergestellt sein können. Der Aufnahmeteil 28 des Adapterbauteils 22 umfasst einen ringförmigen Außenabschnitt 32 sowie einen Zentralabschnitt 34.

Der ringförmige Außenabschnitt 32 verläuft im Wesentlichen ringförmig in einer Ringebene. In dieser Ringebene zentral bezüglich des Außenabschnitts 32 ist der Zentralabschnitt 34 angeordnet. Zentralabschnitt 34 und Außenabschnitt 32 sind miteinander verbunden. Die hierzu vorgesehene flexible Verbindung 36 ermöglicht eine Beweglichkeit des Außenabschnitts 32 gegenüber dem Zentralabschnitt 34 bzw. umgekehrt. Die Beweglichkeit ist dabei vorzugsweise entlang einer senkrecht zu einer Ringebene des Außenabschnitts verlaufenden Zentralachse 38 vorgesehen. Insbesondere kann eine Beweglichkeit um ungefähr 0,5 mm bis 2 mm und insbesondere um ca. 1 mm entlang dieser Zentralachse 38 möglich sein.

Die flexible Verbindung 36 kann insbesondere in der Art einer Federverbindung ausgebildet sein, um diese Beweglichkeit zu ermöglichen. Durch die Beweglichkeit bzw. Verlagerbarkeit wird es möglich, dass ein Abstand zwischen Zentralabschnitt 34 und Hydraulikbauteil bzw. einer Anlagefläche am Hydraulikbauteil für die Spulen am Zentralabschnitt nicht exakt vorgegeben sein muss. Auch bei einem aufgrund von Herstellungstoleranzen geringfügig variablen Abstand kann durch die flexible Verbindung 36 in so gut wie allen Fällen eine Anlage ermöglicht werden. Dies bedingt eine genaue Messung der Bewegungen des Flügelrads im Hydraulikbauteil und damit in Verbindung stehenden Dämpfungselements.

In Figur 3 ist erkennbar, dass der Aufnahmeteil 28 im Wesentlichen ringförmig bzw. rund ausgebildet ist, um an eine runde Aufnahmeöffnung eines Hydraulikbauteils anzukoppeln. Der Aufnahmeteil 28 umfasst einen ringförmigen (umlaufenden) Aufnahmebereich 46, in dem der Dichtungsteil 30 aufgenommen werden kann. Im Wesentlichen ist der Dichtungsteil 28 in seiner Anlage zum Hydraulikbauteil rotationssymmetrisch ausgebildet, um eine Rotation des Abdeckbauteils 28 gegenüber dem Hydraulikbauteil zu ermöglichen. Dies bedingt, dass das gesamte Adapterbauteil zusammen mit dem Abdeckbauteil an der Auswertelektronik gegenüber dem Hydraulikbauteil drehbar ist. Hierdurch kann beispielsweise ein Display der Auswerteelektronik gegenüber dem Hydraulikbauteil gedreht werden, um eine bessere Ablesbarkeit zu ermöglichen. Dies bedingt Vorteile in der Benutzung.

In der Schnittdarstellung auf der rechten Seite von Figur 3 ist erkennbar, dass der Dichtungsteil 30 im ringförmigen Aufnahmebereich 46 des Aufnahmeteils 28 liegt. Da es beim Verbinden des Adapterbauteils 22 mit dem Hydraulikbauteil zu einem Verformen des Dichtungsteils 30 kommen kann, umfasst dieser Aufnahmebereich 46 einen Kompensationsbereich 50. Dieser Kompensationsbereich 50 dient zum Aufnehmen eines Materialüberschusses und einer Verformung des Dichtungsteils 30 beim Verbinden des Adapterbauteils 22 mit dem Hydraulikbauteil. Es wird beim Herstellen der Verbindung also insoweit eine Art Bugwelle des weichen Materials des Dichtungsteils 30 erzeugt, die in diesem Kompensationsbereich 50 aufgenommen werden kann. Hierdurch wird eine erschwerte Handhabung verhindert. Zudem wird einer Beschädigung vorgebeugt.

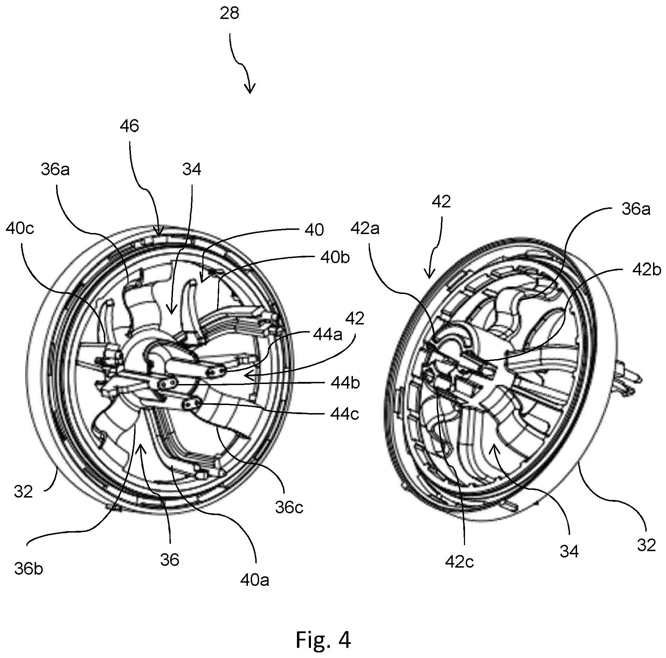

In Figur 4 ist der Aufnahmeteil 28 des Adapterbauteils in zwei Ansichten von oben und unten dargestellt. Zur Übersichtlichkeit ist der Dichtungsteil in der Darstellung in Figur 4 ausgeblendet. Ringförmiger Außenabschnitt 32 und Zentralabschnitt 34 sind über die flexible Verbindung 36 verbunden. Im dargestellten Ausführungsbeispiel umfasst die flexible Verbindung drei Streben 36a, 36b, 36c, die in der Art einer Feder ausgebildet sind, um eine Federwirkung bereitzustellen. Die Streben 36a, 36b, 36c sind geschwungen ausgebildet und ermöglichen so, durch eine Verformung eine Federwirkung zu erzeugen, durch die die gewünschte Verlagerung des Zentralabschnitts 34 gegenüber dem Außenabschnitt 32 erreichbar ist. Die Dimensionierung der flexiblen Verbindung 36 erfolgt dabei experimentell ermittelt vorzugsweise derart, dass eine erforderliche Kraft für die Verlagerung so groß ist, dass einerseits ein ausreichender Anpressdruck zwischen Spulen und Anlagefläche am Hydraulikbauteil ermöglicht wird und andererseits die Belastung der verschiedenen beteiligten Komponenten, insbesondere der Lötverbindungen etc. nicht übermäßig ist.

Um die Auswerteelektronik aufzunehmen bzw. festzulegen, umfasst der Aufnahmeteil 28 eine zweite Aufnahme 40. Im dargestellten Ausführungsbeispiel ist die zweite Aufnahme 40 dreiteilig ausgeführt und umfasst drei Ständer 40a, 40b, 40c, die sich in Richtung des Abdeckbauteils (nicht dargestellt) erstrecken und die drei Aufnahmepunkte für eine Platine ausbilden. Die Platine wiederum trägt dann die Auswerteelektronik. Die zweite Aufnahme 40 bzw. die drei Ständer 40a, 40b, 40c ist mit dem Zentralabschnitt 34 verbunden. Die Ständer 40a, 40b, 40c verlaufen also ausgehend vom Zentralabschnitt 34 in Richtung des Abdeckbauteils. Dies bedingt, dass die Platine und die Auswerteelektronik auf der dem Abdeckbauteil zugewandten Seite festgelegt sein können. Hierdurch wird beispielsweise eine Ablesbarkeit eines Displays für einen Bediener ermöglicht. Zudem wird eine Zugänglichkeit der Auswerteelektronik ermöglicht.

Des Weiteren umfasst der Aufnahmeteil 28 in seinem Zentralabschnitt 34 eine erste Aufnahme 42 für die Spule. Die erste Aufnahme 42 ist dabei auf einer dem Hydraulikbauteil zugewandten Seite des Zentralabschnitts 34 bzw. des Aufnahmeteils 28 vorgesehen. Im dargestellten Ausführungsbeispiel umfasst die erste Aufnahme 42 drei Aufnahmehohlräume 42a, 42b, 42c, in die drei Spulen eingelegt werden können. Die Aufnahmehohlräume 42a, 42b, 42c führen in Aufnahmefortsätze 44a, 44b, 44c über, durch die entsprechende elektrische Kontakte der Spule mit der Auswerteelektronik verbindbar sind. Die Aufnahmehohlräume 42a, 42b, 42c umfassen im dargestellten Ausführungsbeispiel eine Quetschrippe, durch die eine Spule durch Eindrücken bzw. Verformen festgelegt werden kann. Zur Montage des Durchflussmengenmessers bzw. des Adapterbauteils mit der Auswerteelektronik und der Spule können also die Spulen in die Aufnahmehohlräume 42a, 42b, 42c eingedrückt werden und dort festgeklemmt werden. Es ergibt sich eine einfach realisierbare Montierbarkeit.

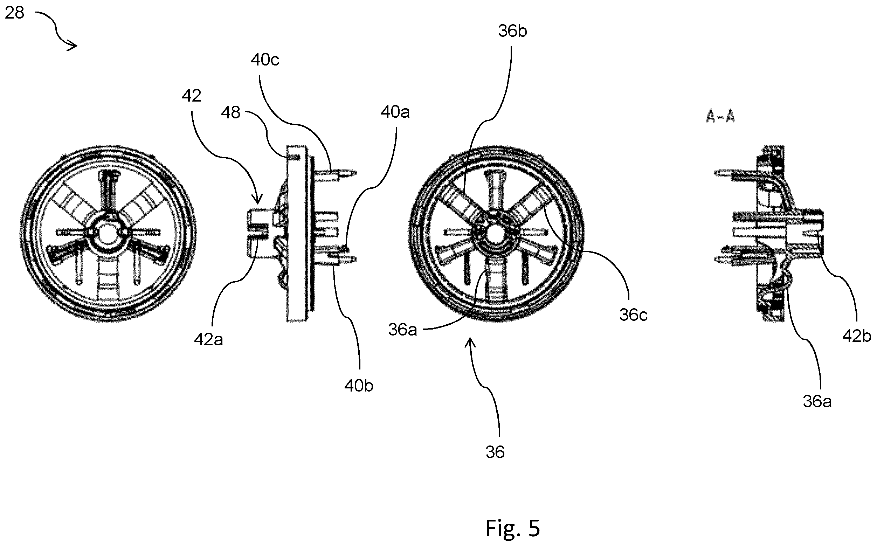

In Figur 5 sind schematisch vier Konstruktionsansichten des Aufnahmeteils 28 dargestellt, um die in Figur 4 bereits eingeführten Komponenten darzustellen. Auf die in der oben eingeführten Beschreibung zu Figur 4 eingeführten Bezugszeichen und Erläuterungen wird Bezug genommen. Die Bezugszeichen in Figur 5 sind der Übersichtlichkeit halber nur an einigen Stellen eingezeichnet. Insbesondere sind in den Darstellungen in Figur 5 die drei Streben 36a, 36b, 36c, die zusammen die flexible Verbindung 36 bilden, dargestellt. Weiterhin erkennbar sind die drei Ständer 40a, 40b, 40c, die zusammen die zweite Aufnahme 40 bilden. Ebenfalls erkennbar in Figur 5 sind die drei Aufnahmehohlräume 42a, 42b, 42c, die zusammen die erste Aufnahme 42 bilden.

In Figur 5 ist zudem erkennbar, dass für die Befestigung zwischen Adapterbauteil und Hydraulikbauteil der Aufnahmeteil 28 in seinem Außenabschnitt einen Rasthaken 48 umfasst. Dieser Rasthaken 48 wirkt mit einem entsprechend ausgebildeten Rastlager am Hydraulikbauteil zusammen, um eine einfache Befestigung zu ermöglichen. Vorteilhafterweise ist es dabei vorgesehen, dass mehrere Rasthaken und Rastlager im Umfang des Aufnahmeteils zusammenwirken, um eine ausreichende Sicherheit der Befestigung zu ermöglichen. Zudem ist es vorteilhafterweise vorgesehen, dass keine radiale Begrenzung am Hydraulikbauteil vorliegt, um insoweit eine Drehbarkeit des Adapterbauteils gegenüber dem Hydraulikbauteil zu ermöglichen (siehe Beschreibung zuvor).

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

## Patentansprüche

1. Adapterbauteil (22) zum Verbinden eines Hydraulikbauteils (12) mit einem Abdeckbauteil (20) eines Durchflussmengenmessers (10), mit:
einem Aufnahmeteil (28) mit einem ringförmigen Außenabschnitt (32) und einem Zentralabschnitt (34), wobei der Zentralabschnitt eine erste Aufnahme (42) für eine Spule (14) auf einer dem Hydraulikbauteil zugewandten Seite und eine zweite Aufnahme (40) für eine Auswerteelektronik (18) auf einer dem Abdeckbauteil zugewandten Seite umfasst und wobei Außenabschnitt und Zentralabschnitt über eine flexible Verbindung (36) verbunden sind; und
einem ringförmigen Dichtungsteil (30), der mit dem Außenabschnitt des Aufnahmeteils korrespondiert, zum Herstellen einer fluiddichten Abdichtung zum Hydraulikbauteil und/oder zum Abdeckbauteil.

2. Adapterbauteil (22) nach Anspruch 1, wobei
die flexible Verbindung (36) als Federverbindung ausgebildet ist; und
der Außenabschnitt (32) und der Zentralabschnitt (34) vorzugsweise entlang einer senkrecht zu einer Ringebene des Außenabschnitts verlaufenden Zentralachse (38) gegenüber einander gefedert verlagerbar sind, insbesondere um eine Federstrecke von ca. 0,5 mm bis 2 mm, insbesondere ca. 1 mm.

3. Adapterbauteil (22) nach einem der vorstehenden Ansprüche, wobei
das Adapterbauteil zum Anbinden in eine runde Aufnahmeöffnung (23) des Hydraulikbauteils (12) ausgebildet ist; und
vorzugsweise ein Außenradius des ringförmigen Dichtungsteils (30) im entspannten Zustand größer als ein Innendurchmesser der Aufnahmeöffnung ist und der ringförmige Dichtungsteil zum Herstellen der fluiddichten Abdichtung zum Hydraulikbauteil durch Verformung ausgebildet ist.

4. Adapterbauteil (22) nach Anspruch 3, wobei der Aufnahmeteil (28)
in seinem Außenabschnitt (32) einen ringförmigen Aufnahmebereich (46) zum Aufnehmen des Dichtungsteils (30) umfasst; und
vorzugsweise einen Kompensationsbereich (50) zum Aufnehmen eines Materialüberschusses einer Verformung des Dichtungsteils beim Verbinden des Adapterbauteils mit dem Hydraulikbauteil (12) umfasst.

5. Adapterbauteil (22) nach einem der vorstehenden Ansprüche, wobei die flexible Verbindung (36) drei Streben (36a, 36b, 36c) zum Bereitstellen einer Federwirkung durch Verformung umfasst, insbesondere drei geschwungen ausgebildete Streben.

6. Adapterbauteil (22) nach einem der vorstehenden Ansprüche, wobei
die erste Aufnahme (42) drei Aufnahmehohlräume (42a, 42b, 42c) umfasst, die sich im Wesentlichen vom Zentralabschnitt (34) ausgehend in Richtung des Hydraulikbauteils (12) verlaufen und die jeweils zum Aufnehmen einer Spule (14) ausgebildet sind; und
die Aufnahmehohlräume vorzugsweise zum Festlegen der Spulen in einer parallel zu einer Ringebene des Außenabschnitts (32) verlaufenden Spulenebene ausgebildet sind, insbesondere durch Festklemmen und/oder Verformung einer Quetschrippe.

7. Adapterbauteil (22) nach einem der vorstehenden Ansprüche, wobei die zweite Aufnahme (40) drei Ständer (40a, 40b, 40c) umfasst, die sich zumindest teilweise in Richtung des Abdeckbauteils (20) erstrecken und die in drei in einer parallel zu einer Ringebene des Außenabschnitts (32) verlaufenden Aufnahmeebene liegende Aufnahmepunkte für eine Platine enden.

8. Adapterbauteil (22) nach einem der vorstehenden Ansprüche, wobei ein Material des Dichtungsteils (30) weicher als ein Material des Aufnahmeteils (28) ist.

9. Adapterbauteil (22) nach einem der vorstehenden Ansprüche, wobei das Adapterbauteil in einem Zwei-Komponenten-Spritzgussverfahren herstellbar ist, bei dem in einem ersten Schritt der Aufnahmeteil eingespritzt wird und in einem zweiten Schritt der Dichtungsteil (30) eingespritzt wird.

10. Adapterbauteil (22) nach einem der vorstehenden Ansprüche, wobei der Dichtungsteil (30) an seiner Anlage zu Hydraulikbauteil (12) und/oder an seiner Anlage zum Abdeckbauteil (20) rotationssymmetrisch ausgebildet ist, um eine Rotation des Abdeckbauteils gegenüber dem Hydraulikbauteil zu ermöglichen.

11. Adapterbauteil (22) nach einem der vorstehenden Ansprüche, wobei
der Aufnahmeteil (28) in seinem Außenabschnitt (32) einen Rasthaken und/oder ein Rastlager zum Herstellen einer Verbindung mit dem Hydraulikbauteil (12) durch Verrasten umfasst; und
vorzugsweise der Rasthaken und/oder das Rastlager keine radiale Begrenzung aufweist, um eine Drehbarkeit des Adapterbauteils gegenüber dem Hydraulikbauteil zu ermöglichen.

12. Adapterbauteil (22) nach einem der vorstehenden Ansprüche, wobei der Aufnahmeteil (28) eine Sollbruchstelle aufweist, die zum Brechen bei einem Entfernen des Adapterbauteils vom Hydraulikbauteil (12) nach einem initialen Befestigen ausgebildet ist.

13. Durchflussmengenmesser (10) zum Messen eines Fluidflusses durch eine Leitung mit:
einem Hydraulikbauteil (12) zum Durchleiten des Fluidflusses mit einem in dem Fluidfluss angeordneten Flügelrad, an dem ein Dämpfungselement angeordnet ist;
einer Spule (14) zum Erfassen einer Bewegung des Dämpfungselements an dem Flügelrad;
eine Platine (16) mit einer Auswerteelektronik (18), die mit der Spule verbunden ist;
einem Abdeckbauteil (20) zum Schützen der Auswerteelektronik vor externen Einflüssen; und
einem Adapterbauteil (22) nach einem der vorstehenden Ansprüche, das das Hydraulikbauteil mit dem Abdeckbauteil verbindet.

14. Verfahren zum Herstellen eines Adapterbauteils (22) nach einem der Ansprüche 1 bis 12, mit den Schritten
Spritzgießen des Aufnahmeteils (28) und anschließendes Spritzgießen des Dichtungsteils (30) mit einem anderen Material in einem Zwei-Komponenten-Spritzgussverfahren.

## Claims

1. An adapter component (22) for connecting a hydraulic component (12) to a cover component (20) of a flow meter (10), comprising:
a receiving part (28) having an annular outer section (32) and a central section (34), wherein the central section comprises a first receptacle (42) for a coil (14) on a side facing the hydraulic component and a second receptacle (40) for evaluation electronics (18) on a side facing the cover component, and wherein the outer section and the central section are connected via a flexible connection (36); and
an annular sealing part (30) that corresponds with the outer section of the receiving part, for producing a fluid-tight seal to the hydraulic component and/or to the cover component.

2. The adapter component (22) according to claim 1, wherein
the flexible connection (36) is configured as a spring connection; and
the outer section (32) and the central section (34) are preferably displaceably spring-mounted relative to each other along a central axis (38) running perpendicular to a ring plane of the outer section, in particular by a spring distance of approximately 0.5 mm to 2 mm, in particular approximately 1 mm.

3. The adapter component (22) according to one of the preceding claims, wherein
the adapter component is configured for connection into a round receiving opening (23) of the hydraulic component (12); and
preferably an outer radius of the annular sealing part (30) in the relaxed state is greater than an inner diameter of the receiving opening and the annular sealing part is configured for producing the fluid-tight seal to the hydraulic component by deformation.

4. The adapter component (22) according to claim 3, wherein the receiving part (28)
comprises in its outer section (32) an annular receiving region (46) for receiving the sealing part (30); and
preferably comprises a compensation region (50) for receiving a material excess of a deformation of the sealing part when connecting the adapter component to the hydraulic component (12).

5. The adapter component (22) according to one of the preceding claims, wherein the flexible connection (36) comprises three struts (36a, 36b, 36c) for providing a spring effect through deformation, in particular three curved struts.

6. The adapter component (22) according to one of the preceding claims, wherein
the first receptacle (42) comprises three receiving cavities (42a, 42b, 42c) that extend substantially from the central section (34) in the direction of the hydraulic component (12) and that are each configured for receiving a coil (14); and
the receiving cavities are preferably configured for fixing the coils in a coil plane running parallel to a ring plane of the outer section (32), in particular by clamping and/or deformation of a crush rib.

7. The adapter component (22) according to one of the preceding claims, wherein the second receptacle (40) comprises three posts (40a, 40b, 40c) that extend at least partially in the direction of the cover component (20) and that terminate in three receiving points for a circuit board lying in a receiving plane running parallel to a ring plane of the outer section (32).

8. The adapter component (22) according to one of the preceding claims, wherein a material of the sealing part (30) is softer than a material of the receiving part (28).

9. The adapter component (22) according to one of the preceding claims, wherein the adapter component can be manufactured in a two-component injection molding process in which the receiving part is injected in a first step and the sealing part (30) is injected in a second step.

10. The adapter component (22) according to one of the preceding claims, wherein the sealing part (30) is configured to be rotationally symmetrical at its contact surface to the hydraulic component (12) and/or at its contact surface to the cover component (20) in order to enable rotation of the cover component relative to the hydraulic component.

11. The adapter component (22) according to one of the preceding claims, wherein
the receiving part (28) comprises in its outer section (32) a latching hook and/or a latching seat for producing a connection with the hydraulic component (12) by latching; and
preferably the latching hook and/or the latching seat has no radial limitation in order to enable rotatability of the adapter component relative to the hydraulic component.

12. The adapter component (22) according to one of the preceding claims, wherein the receiving part (28) has a predetermined breaking point that is configured to break upon removal of the adapter component from the hydraulic component (12) after an initial attachment.

13. A flow meter (10) for measuring a fluid flow through a line, comprising:
a hydraulic component (12) for passing the fluid flow therethrough, having an impeller arranged in the fluid flow, on which a damping element is arranged;
a coil (14) for detecting a movement of the damping element on the impeller;
a circuit board (16) having evaluation electronics (18) connected to the coil;
a cover component (20) for protecting the evaluation electronics from external influences; and
an adapter component (22) according to one of the preceding claims, which connects the hydraulic component to the cover component.

14. A method for manufacturing an adapter component (22) according to one of claims 1 to 12, comprising the steps of
injection molding the receiving part (28) and subsequently injection molding the sealing part (30) with a different material in a two-component injection molding process.

## Revendications

1. Composant adaptateur (22) pour relier un composant hydraulique (12) à un composant de recouvrement (20) d'un débitmètre (10), comprenant :
une partie de réception (28) avec une section extérieure annulaire (32) et une section centrale (34), la section centrale comprenant un premier logement (42) pour une bobine (14) sur un côté tourné vers le composant hydraulique et un deuxième logement (40) pour une électronique d'évaluation (18) sur un côté tourné vers le composant de recouvrement, et la section extérieure et la section centrale étant reliées par une liaison flexible (36) ; et
une partie d'étanchéité annulaire (30), qui correspond à la section extérieure de la partie de réception, pour établir une étanchéité étanche aux fluides vers le composant hydraulique et/ou vers le composant de recouvrement.

2. Composant adaptateur (22) selon la revendication 1, dans lequel
la liaison flexible (36) est réalisée sous forme de liaison à ressort ; et
la section extérieure (32) et la section centrale (34) sont de préférence déplaçables de manière élastique l'une par rapport à l'autre le long d'un axe central (38) s'étendant perpendiculairement à un plan annulaire de la section extérieure, en particulier d'une course de ressort d'environ 0,5 mm à 2 mm, en particulier d'environ 1 mm.

3. Composant adaptateur (22) selon l'une des revendications précédentes, dans lequel
le composant adaptateur est conçu pour être connecté dans une ouverture de réception ronde (23) du composant hydraulique (12) ; et
de préférence, un rayon extérieur de la partie d'étanchéité annulaire (30) à l'état détendu est supérieur à un diamètre intérieur de l'ouverture de réception et la partie d'étanchéité annulaire est conçue pour établir l'étanchéité étanche aux fluides vers le composant hydraulique par déformation.

4. Composant adaptateur (22) selon la revendication 3, dans lequel la partie de réception (28)
comprend dans sa section extérieure (32) une zone de réception annulaire (46) pour recevoir la partie d'étanchéité (30) ; et
comprend de préférence une zone de compensation (50) pour recevoir un excès de matériau d'une déformation de la partie d'étanchéité lors de la connexion du composant adaptateur au composant hydraulique (12).

5. Composant adaptateur (22) selon l'une des revendications précédentes, dans lequel la liaison flexible (36) comprend trois entretoises (36a, 36b, 36c) pour fournir un effet de ressort par déformation, en particulier trois entretoises de forme incurvée.

6. Composant adaptateur (22) selon l'une des revendications précédentes, dans lequel
le premier logement (42) comprend trois cavités de réception (42a, 42b, 42c), qui s'étendent essentiellement depuis la section centrale (34) en direction du composant hydraulique (12) et qui sont chacune conçues pour recevoir une bobine (14) ; et
les cavités de réception sont de préférence conçues pour fixer les bobines dans un plan de bobine s'étendant parallèlement à un plan annulaire de la section extérieure (32), en particulier par serrage et/ou déformation d'une nervure d'écrasement.

7. Composant adaptateur (22) selon l'une des revendications précédentes, dans lequel le deuxième logement (40) comprend trois supports (40a, 40b, 40c), qui s'étendent au moins partiellement en direction du composant de recouvrement (20) et qui se terminent par trois points de réception pour une carte de circuit imprimé situés dans un plan de réception s'étendant parallèlement à un plan annulaire de la section extérieure (32).

8. Composant adaptateur (22) selon l'une des revendications précédentes, dans lequel un matériau de la partie d'étanchéité (30) est plus souple qu'un matériau de la partie de réception (28).

9. Composant adaptateur (22) selon l'une des revendications précédentes, dans lequel le composant adaptateur peut être fabriqué dans un procédé de moulage par injection bi-composant, dans lequel la partie de réception est injectée dans une première étape et la partie d'étanchéité (30) est injectée dans une deuxième étape.

10. Composant adaptateur (22) selon l'une des revendications précédentes, dans lequel la partie d'étanchéité (30) est réalisée de manière symétrique en rotation à son appui contre le composant hydraulique (12) et/ou à son appui contre le composant de recouvrement (20), afin de permettre une rotation du composant de recouvrement par rapport au composant hydraulique.

11. Composant adaptateur (22) selon l'une des revendications précédentes, dans lequel
la partie de réception (28) comprend dans sa section extérieure (32) un crochet d'encliquetage et/ou un logement d'encliquetage pour établir une liaison avec le composant hydraulique (12) par encliquetage ; et
de préférence, le crochet d'encliquetage et/ou le logement d'encliquetage ne présente pas de limitation radiale, afin de permettre une possibilité de rotation du composant adaptateur par rapport au composant hydraulique.

12. Composant adaptateur (22) selon l'une des revendications précédentes, dans lequel la partie de réception (28) présente un point de rupture prédéterminé, qui est conçu pour se rompre lors d'un retrait du composant adaptateur du composant hydraulique (12) après une fixation initiale.

13. Débitmètre (10) pour mesurer un flux de fluide à travers une conduite, comprenant :
un composant hydraulique (12) pour faire passer le flux de fluide avec une roue à ailettes disposée dans le flux de fluide, sur laquelle un élément d'amortissement est disposé ;
une bobine (14) pour détecter un mouvement de l'élément d'amortissement sur la roue à ailettes ;
une carte de circuit imprimé (16) avec une électronique d'évaluation (18), qui est reliée à la bobine ;
un composant de recouvrement (20) pour protéger l'électronique d'évaluation des influences externes ; et
un composant adaptateur (22) selon l'une des revendications précédentes, qui relie le composant hydraulique au composant de recouvrement.

14. Procédé de fabrication d'un composant adaptateur (22) selon l'une des revendications 1 à 12, comprenant les étapes suivantes :
moulage par injection de la partie de réception (28) et ensuite moulage par injection de la partie d'étanchéité (30) avec un autre matériau dans un procédé de moulage par injection bi-composant.
